(19) **Europäisches Patentamt European Patent Office Office européen des brevets**

(11) **EP 1 260 071 B1**

(12) **FASCICULE DE BREVET EUROPEEN**

(45) Date de publication et mention de la délivrance du brevet:
**23.01.2008 Bulletin 2008/04**

(21) Numéro de dépôt: **01909892.0**

(22) Date de dépôt: **23.02.2001**

(51) Int Cl.:
***H04L 25/02*** *(2006.01)*

(86) Numéro de dépôt international:
**PCT/FR2001/000542**

(87) Numéro de publication internationale:
**WO 2001/065789 (07.09.2001 Gazette 2001/36)**

(54) **PROCEDE ET DISPOSITIF D'ESTIMATION D'UN CANAL DE PROPAGATION**

VERFAHREN UND VORRICHTUNG FÜR KANALSCHÄZTUNG

METHOD AND DEVICE FOR ESTIMATING CHANNEL PROPAGATION

(84) Etats contractants désignés:
**AT BE CH CY DE DK ES FI FR GB GR IE IT LI LU MC NL PT SE TR**

(30) Priorité: **29.02.2000 FR 0002548**

(43) Date de publication de la demande:
**27.11.2002 Bulletin 2002/48**

(73) Titulaire: **Thales**
**92200 Neuilly Sur Seine (FR)**

(72) Inventeurs:
  • **HAYOUN, Lionel,**
  **c/o Thomson-CSF Propriété Intellectuelle**
  **F-94117 Arcueil Cedex (FR)**

  • **PIREZ, Didier,**
  **c/o Thomson-CSF Propriété Intellectuelle**
  **F-94117 Arcueil Cedex (FR)**

(74) Mandataire: **Dudouit, Isabelle**
  **Marks & Clerk France**
  **31-33 Avenue Aristide Briand**
  **94117 Arcueil Cedex (FR)**

(56) Documents cités:
  **EP-A- 0 942 561          US-A- 5 251 233**
  **US-A- 5 544 156          US-A- 5 754 599**

**Description**

La présente invention concerne un procédé et un dispositif d'estimation des paramètres d'un canal de propagation, pour décoder des signaux numériques, en utilisant une séquence d'apprentissage ou de référence connue du récepteur. Les signaux sont transmis par trames successives, chaque trame étant partitionnée en un nombre déterminé de créneaux temporels.

L'invention s'applique par exemple pour démoduler un signal numérique à large bande ou à spectre étalé.

L'invention trouve son application dans le domaine des réseaux cellulaires fonctionnant sur le principe du « CDMA » (abréviation anglaise de Code Division Multiple Access), tels que les réseaux basés sur la norme IS95 en service depuis plusieurs années aux USA, ou encore ceux basés sur la norme UTMS (abréviation anglaise de Universal Mobile Telecommunication System) qui devraient être opérationnels en Europe au moins à l'horizon de l'an 2002. Elle s'applique notamment dans le cadre des radiocommunications mobiles.

Le procédé selon l'invention peut sans sortir du cadre de l'invention s'appliquer à des canaux de propagation de nature quelconque.

Dans un système CDMA tous les utilisateurs partagent la même bande et utilisent des formes d'onde spectralement étalées à l'aide de codes, chaque utilisateur ayant son propre code.

A titre indicatif, une description d'un tel système peut être trouvée dans une des références suivantes :

[2] W.C.Y. LEE, "Overview of cellular CDMA ", IEEE Transactions on vehicular technology, vol. 40, n° 2, Mai 1991 ou

[3] R.L. PICKHOLTZ, D.L. SHILLING et L.B. MILSTEIN, " Theory of spread-spectrum communications - A tutorial ", IEEE Transactions on communications, vol. com-30, n° 5, pp 855-884, Mai 1982.

Le principe de l'étalement de spectre par séquence directe est de découper un bit utile de durée T en $N_G$ impulsions ou chips de durée $T'=T/N_G$. La bande W' du signal résultant est ainsi $N_G$ fois plus grande que celle du signal utile W, ce qui permet théoriquement un rythme de modulation $N_G$ fois plus grand. Les séquences d'impulsions ou codes, sont en général des séquences pseudo-aléatoires (séquences PN), conçues pour avoir des propriétés d'autocorrélation et d'intercorrélation particulières (idéalement, l'autocorrélation est impulsionnelle et les corrélations entre codes sont nulles). De telles séquences sont décrites par exemple dans les deux ouvrages : [1]: J.G. PROAKIS , "Digital communications", McGraw Hill et la référence [2] précitée.

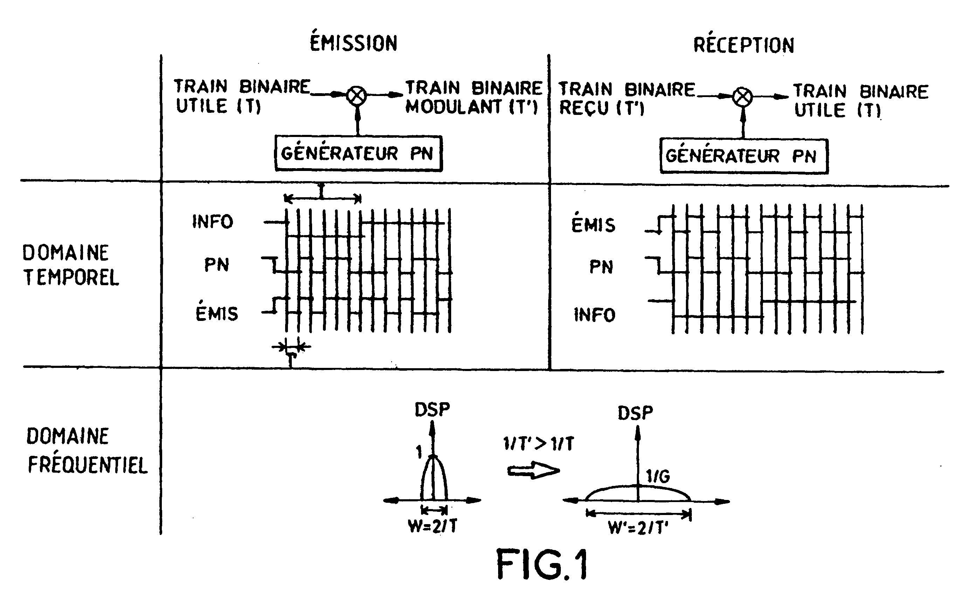

A la réception, chaque utilisateur (ou canal de transmission) est démodulé par une opération de corrélation avec son code d'étalement, connu du récepteur. Ce traitement est un filtrage adapté qui apporte un gain de réception égal au rapport entre la bande étalée et la bande utile initiale représentée à la figure 1.

Le concept CDMA permet non seulement l'accès multiple (grande combinatoire offerte par les codes pseudo-aléatoires, pour attribuer un code différent à chaque utilisateur) mais aussi une robustesse accrue au brouillage (intentionnel ou non) et aux mauvaises conditions de propagation (trajets multiples, fading, ...).

Actuellement, il est connu d'utiliser une forme d'onde étalée spectralement pour résister efficacement au phénomène de trajets multiples (ce phénomène apparaît pour divers canaux de propagation et en particulier pour le canal radiomobile) et même d'en tirer profit pour lutter contre l'évanouissement ou fading (variations aléatoires de l'amplitude et de la phase du signal).

En effet, si $T_m$ est l'étalement temporel du canal et si W est la largeur de bande du signal émis, alors il est possible théoriquement d'isoler en réception $T_mW$ composantes (une largeur de bande W permet en réception, par corrélation, d'isoler des trajets avec une résolution temporelle égale à 1/W), qui correspondent physiquement aux différents trajets de propagation. Tout ou partie de ces composantes sont indépendantes et il est possible de les recombiner de façon à accroître ou maximiser le rapport signal sur bruit. On obtient ainsi un effet de diversité exploitant l'indépendance statistique des différents trajets de propagation constituant le signal reçu.

Cette technique de diversité a été proposée initialement par Price et Green en 1958 qui ont donné le nom de récepteur RAKE au traitement optimal (le récepteur isole chaque trajet puis fait une recombinaison d'où l'analogie avec un rateau de jardinerie). Ce traitement, qui somme de manière cohérente tous les trajets, consiste simplement en un filtrage adapté au signal reçu c'est à dire adapté au canal (on montre que ce traitement est optimal dès lors que l'on considère la réception d'un seul utilisateur ou code, tous les autres utilisateurs constituant un bruit possédant la propriété d'être blanc et gaussien).

A ce propos, on se reportera par exemple à l'ouvrage « Digital communications » aux éditions McGraw Hill ayant pour auteur J.G.Proakis.

La mise en oeuvre du récepteur RAKE suppose donc la connaissance de la réponse impulsionnelle du canal, c'est à dire des amplitudes complexes de tous les trajets. En pratique, il est possible de disposer d'une estimation de ces amplitudes qui tient compte des différentes caractéristiques du canal de propagation (étalement temporel, fading) et en particulier ses différentes échelles de fluctuation (fading rapide et fading lent).

Sur le canal radiomobile, on distingue généralement deux échelles de variation des caractéristiques de propagation décrites par exemple dans l'ouvrage ayant pour auteur D.Parsons édité chez Pentech Press en 1992 sous le titre « The mobile radio propagation channel ».

La première échelle correspond au fading rapide (ou fading de Rayleigh), qui induit une variation des amplitudes et phases des trajets au bout d'un temps de l'ordre du temps de cohérence du canal (inverse de la bande Doppler du canal). Dans le contexte radiomobile, ce temps de décorrélation (intervalle de temps pour lequel deux réalisations de l'amplitude complexe d'un trajet sont décorrélées) correspond à une avancée du mobile de l'ordre de la demie-longueur d'onde de la fréquence porteuse référence [4]. A cette échelle de temps, les temps de retard des trajets sont constants.

La seconde échelle de fluctuation correspond au fading lent (ou fading à long terme), dû aux effets de masquage et aux changements d'environnement. Ce phénomène induit d'une part une modification de la puissance moyenne des trajets, et d'autre part une évolution significative des temps de retard des trajets ; des trajets sont également susceptibles d'apparaître et d'autres de disparaître.

Le temps de décorrélation (ou la distance de décorrélation) associé au fading lent dépend du canal, c'est à dire du type d'environnement dans lequel le mobile évolue. En pratique, ce temps de décorrélation est nettement supérieur (au moins un ordre de grandeur) à celui associé au fading rapide. Par exemple, l'ETSI dans le cadre de l'UMTS, indique une distance de décorrélation du fading lent, pour un environnement urbain, environ égale à 20 mètres ; cela conduit à un rapport d'environ 300 ($20/(\lambda/2)$ avec $\lambda = c/f$ et $f = 2.10^9$ Hz) entre les temps de décorrélation à long et court terme.

US 5 544 156 décrit un système servant à effectuer une démodulation cohérente d'un signal de liaison montante dans un système d'accès multiple par différence de code (AMDC) à Fréquence multiple.

L'objet de l'invention concerne un procédé permettant l'estimation dynamique du canal de propagation, tenant compte des différentes fluctuations évoquées précédemment, dans le but de démoduler un signal numérique.

Le procédé s'applique notamment dans les cas suivants:

- Réception mono-utilisateur, c'est à dire que l'on s'intéresse à la démodulation d'un seul utilisateur, tous les autres étant considérés comme du bruit (pas de détection conjointe ou détection multi-utilisateurs) ;
- Emission d'une séquence de référence, en plus des données utiles, dédiée à l'estimation du canal de propagation ;
- Le canal de propagation est fluctuant ;
- L'étalement temporel du canal est inférieur à la durée d'un bit utile. Ainsi, l'interférence, inter-symboles peut être négligée et la mise en oeuvre d'un égaliseur en aval du récepteur RAKE n'est pas nécessaire. Chaque bit ou symbol utile est démodulé indépendamment des autres bits ou symboles utiles ;
- Le canal peut être considéré comme constant pendant la durée d'un bit ou symbol utile ($T_{coherence}$ » T, où $T_{cohérence}$ est le temps de cohérence du canal).

On désigne sous le mot « symbole » une unité d'information, l'expression « symbole d'apprentissage » ou « pilote » correspond à une unité d'information du signal connu.

L'invention concerne un procédé d'estimation d'un canal de propagation, entre une source d'émission de données et un récepteur, en utilisant au moins une séquence d'apprentissage comportant des symboles dits « symboles pilotes », ladite séquence étant connue du récepteur, pour décoder un signal de données (signal numérique), les signaux étant transmis par trames successives, chaque trame étant partitionnée en un nombre déterminé de créneaux temporels. Il est caractérisé en ce qu'il comporte au moins les étapes suivantes :

a) choisir une fenêtre de recherche, estimer l'amplitude complexe et l'énergie de chaque trajet prépondérant k situé dans la fenêtre de recherche pendant la durée de chacun des créneaux temporels et démoduler les bits de données (bits utiles), K étant correspondant à un indice du symbole,
b) mettre à jour l'énergie des trajets dont les retards appartiennent à une Fenêtre de recherche avec un pas d'analyse possible de la fenêtre de recherche tous les K créneaux, correspondant à un intervalle temporel,
c) sélectionner tous les K*L créneaux, les trajets k d'énergie prépondérants, L est le Facteur de mise à jour des retards.

L'invention concerne aussi un dispositif permettant d'estimer un canal de propagation entre un moyen d'émission et un moyen de réception afin de démoduler les données utiles reçues. Il est caractérisé en ce qu'il comporte un microprocesseur adapté pour mettre en oeuvre le procédé selon l'invention, le signal pouvant être un signal étalé et être démodulé selon le principe RAKE.

Le dispositif et le procédé selon l'invention s'applique pour démoduler un signal à bande étalé de type CDMA, tel qu'un signal de type UMTS.

Le procédé selon l'invention offre notamment l'avantage de disposer « en temps réel » d'un ou de plusieurs paramètres estimés d'un canal de propagation, de mettre à jour ces paramètres afin d'améliorer la démodulation des signaux reçus par un récepteur fonctionnant sur le principe du RAKE. L'amélioration consiste notamment à s'affranchir des variations des paramètres du canal tels que l'étalement temporel, la variation en amplitude et en phase d'un trajet.

L'invention sera mieux comprise à la lecture de la description qui suit à titre illustratif et nullement limitatif d'un exemple relatif à l'estimation d'un canal de propagation de signaux numériques de type UMTS où :

- la figure 1 représente un schéma d'étalement de spectre,
- la figure 2 schématise une forme d'onde pour la liaison montante d'un émetteur à un récepteur,
- la figure 3 schématise un synoptique émission-réception d'une onde UTMS selon l'invention,

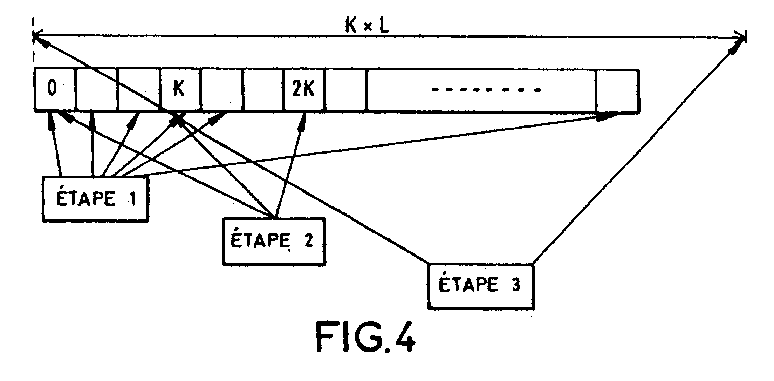

- la figure 4 montre schématiquement les périodes de réalisation des trois étapes du procédé selon l'invention sur la trame d'un signal,
- la figure 5 est un exemple d'organigramme d'une estimation d'un canal de propagation mis en oeuvre dans le mode de l'invention plus particulièrement décrit ci-après, et
- les figures 6 à 9 détaillent les étapes de la figure 5 sous la forme d'organigrammes.

Avant d'exposer les différentes étapes du procédé selon l'invention, le paragraphe ci-après a pour but de permettre au lecteur d'appréhender les principes du récepteur RAKE utilisé dans l'exemple donné à titre illustratif et nullement limitatif.

Considérons l'émission d'un signal module en BPSK (Binary Phase Shift Keying) au rythme $T_s$ (l'extension à d'autres modulations de phase ne pose pas de problème: la structure du récepteur est identique, seule la procédure de décision en aval est modifiée) et étalé par séquence directe avec un gain $N = T_s / T_c$ où $T_c$ est la durée du chip.

Le signal émis est donc de la forme (bande de base):

$$s(t) = \sqrt{P_s}\, d(t)\, c(t)$$

où $P_s$ est la puissance du signal, et $d(t)$ la séquence de bits utiles,

$$d(t) = \sum_{k=-\infty}^{+\infty} d_k\, g_{T_s}(t - kT_s)$$

$d_k = \pm 1$, de façon équiprobable,

$g_{T_s}$ est l'impulsion utilisée pour véhiculer l'information, supposée rectangulaire ici par souci de simplicité :

$$\begin{cases} g_{T_s}(t) = 1 \ si \ 0 \le t \le T_s \\ g_{T_s}(t) = 0 \ \text{sinon} \end{cases}$$

c(t) est le code d'étalement ayant idéalement une fonction d'autocorrélation impulsionnelle (c'est à dire que la corrélation entre deux versions du code décalées d'un temps quelconque non nul vaut 0),

$$c(t) = \sum_{k=-\infty}^{+\infty} c_k\, g_{T_c}(t - kT_c)$$

avec $c_k = \pm 1$

Si la réponse impulsionnelle du canal a pour expression:

$$h(t) = \sum_{k=1}^{N_t} a_k \, e^{j\varphi k} \, \delta(t - \tau_k)$$

c'est à dire que le canal de propagation est constitué de $N_t$ trajets, d'amplitudes complexes $a_k \, e^{j\varphi k}$ et de temps de propagation $\tau_k$,
avec

$$\forall i \neq j \quad \left| \tau_i - \tau_j \right| \geq T_c$$

(autrement dit tous les trajets sont discernables)
alors le signal reçu (complexe en bande de base) a pour expression:

$$r(t) = \sum_{k=1}^{N_t} \sqrt{P_s} \, a_k \, e^{j\varphi_t} \, d(t - \tau_k) c(t - \tau_k) + n(t) \quad (E1)$$

où n(t) représente le bruit thermique, supposé centré gaussien complexe, temporellement blanc et décorrélé du signal utile, de densité spectrale $N_0$.

Le principe du RAKE est d'isoler les contributions de chaque trajet puis de les recombiner en cohérence de phase de façon à optimiser le rapport signal sur bruit.

Dans toute la suite, on supposera que l'interférence inter-symbole est négligeable, autrement dit que la durée d'un symbole est grande devant l'étalement temporel du canal. Cette hypothèse est souvent vérifiée dans la pratique et elle est adoptée, explicitement ou implicitement, par la plupart des auteurs. Le récepteur RAKE sera donc mis en oeuvre indépendamment sur chaque symbole $d_k$.

On suppose par ailleurs que le canal est constant pendant la durée d'un symbole utile ($\Delta t_c \gg T_s$, $\Delta t_c$ étant le temps de cohérence du canal).

La contribution d'un trajet est obtenue en corrélant le signal reçu avec le code d'étalement décalé du retard du trajet considéré, supposé connu.

Ainsi, la contribution du trajet de retard $\tau_i$ calculée sur le symbole d'indice k, est donnée par

$$r_i(k) = \frac{1}{T_s} \int_{(T_s)} s(t) c(t - \tau_i) dt \quad (E2)$$

(par souci de simplicité, on suppose que les échantillons du signal sont reçus au rythme chip):

Le développement de (E2) à l'aide de (E1) conduit à trois termes, le premier constituant la partie utile et les deux autres constituant la partie parasite:

$$r_i(k) = \frac{1}{T_s} \int_{(T_s)} \sqrt{P_s} \, a_i \, e^{j\varphi i} d(t - \tau_i) c(t - \tau_i)^2 \, dt$$

$$+ \; \frac{1}{T_s} \sum_{\substack{j=1 \\ j \neq i}}^{N_t} \sqrt{P_s} \, a_j \, e^{j\varphi j} \, d_k \int_{(T_s)} c(t - \tau_i) c(t - \tau_j) \, dt$$

$$+ \; \frac{1}{T_s} \int_{(T_s)} n(t) c(t - \tau_i) \, dt$$

Le code d'étalement est conçu de sorte que deux versions décalées, d'un temps supérieur à la durée du chip, soient approximativement décorrélées (l'interférence inter-trajet est ainsi minimisée):

$$\frac{1}{T_s} \int_{(T_s)} c(t - \tau_i) c(t - \tau_j) dt \approx \frac{1}{N} << 1 \quad \text{pour} \left| \tau_i - \tau_j \right| \geq T_c \quad (P_1)$$

La contribution du trajet i se récrit donc:

$$r_i(k) = \sqrt{P_s}\, a_i\, e^{j\varphi_i}\, d_k + b_i(k)$$

$b_i(k)$ étant le terme parasite regroupant le bruit thermique et l'interférence créée par les autres trajets. Un calcul simple montre qu'en l'absence de l'interférence inter-trajets, la puissance du bruit $b_i(k)$ vaut $N_0/T_s$.

Le problème se pose à présent de la manière suivante: disposant des $N_t$ contributions $r_i(k)$ (on suppose ici que le nombre de prises du récepteur est égal au nombre réel de trajets), on cherche un jeu de poids complexes ($w_1$, $w_2$, ..., $w_{Nt}$) tel que le rapport signal sur bruit du signal recombiné $r(k)$ soit maximum:

$$r(k) = \sum_{i=1}^{N_t} w_i * r_i(k)$$

où $w_i^*$ est le complexe conjugué de $w_i$.

Le rapport signal sur bruit de $r(k)$ est défini par ($E(x)$ désigne la valeur moyenne de x):

$$RSB\big(r(k)\big) = \frac{\left| \sum_{i=1}^{N_t} w_i * \sqrt{P_s}\, a_i\, e^{j\varphi_i}\, d_k \right|^2}{E\left( \left| \sum_{i=1}^{N_t} w_i * b_i(k) \right|^2 \right)}$$

Si l'on suppose que les termes de bruit associés à chaque trajet $b_i(k)$ sont décorrélés et de même puissance moyenne $P_b$ alors la pondération optimale est donné par (inégalité de Schwartz):

$$w_i = k\, a_i\, e^{j\varphi_i}$$

où k est une constante arbitraire.

Chaque trajet est donc pondéré conformément à son rapport signal sur bruit propre.

En définitive, le récepteur RAKE optimal calcule donc, pour le symbole k, la quantité (en supposant parfaite l'estimation des paramètres du canal):

$$r(k) = \sum_{i=1}^{N_t} a_i\, e^{-j\varphi_i} \left( \frac{1}{T_s} \int_{(T_s)} s(t) c(t - \tau_i) dt \right) = \sqrt{P_s} \left( \sum_{i=1}^{N_t} a_i^2 \right) d_k + b(k) \quad (E3)$$

avec

$$b(k) = \sum_{i=1}^{N_t} a_i\, e^{-j\varphi_i}\, b_i(k)$$

et le symbole est décidé en comparant la partie réelle (théoriquement, au bruit près, r(k) est réel) de r(k) à 0 (en BPSK).

Le rapport signal sur bruit obtenu vaut:

$$RSB_{RAKE} = \left( \sum_{i=1}^{N_t} a_i{}^2 \right) \frac{P_s}{P_b}$$

C'est la somme des rapports signal à bruit relatifs à chacun des trajets.

Le traitement RAKE est optimal en l'absence d'interférences entre symboles (au sens strict, cela signifie que le canal de propagation ne contient qu'un seul trajet ou que la fonction d'autocorrélation du code est idéale) et si le bruit (bruit thermique + interférences inter-utilisateurs) est blanc (ce qui signifie que les codes des différents utilisateurs sont orthogonaux pour tous les décalages temporels possibles).

La mise en oeuvre du récepteur RAKE, décrit par l'équation (E3), suppose que les amplitudes complexes $a_k\, e^{j\phi_k}$ et les retards $\tau_k$ des trajets sont connus. En pratique, on ne peut obtenir qu'une estimation de ces paramètres, qui en général est réalisée grâce à l'émission d'une séquence de symboles connue du récepteur (désignée par le terme séquence de référence ou séquence pilote ou encore séquence d'apprentissage).

L'estimation du canal doit être mise à jour à une fréquence cohérente avec les vitesses de variation (étalement Doppler) des différents paramètres $a_k$, $\phi_k$ et $\tau_k$.

Enfin, si le canal varie lentement vis à vis de la durée d'un symbole ($T_s$), il est possible de faire cette estimation en utilisant plusieurs symboles consécutifs ce qui permet d'obtenir des estimées plus fiables.

L'exemple de mise en oeuvre est décrit ci-après dans une application des réseaux cellulaires fonctionnant sur le principe du CDMA (Code division Multiple Access), tels que précités.

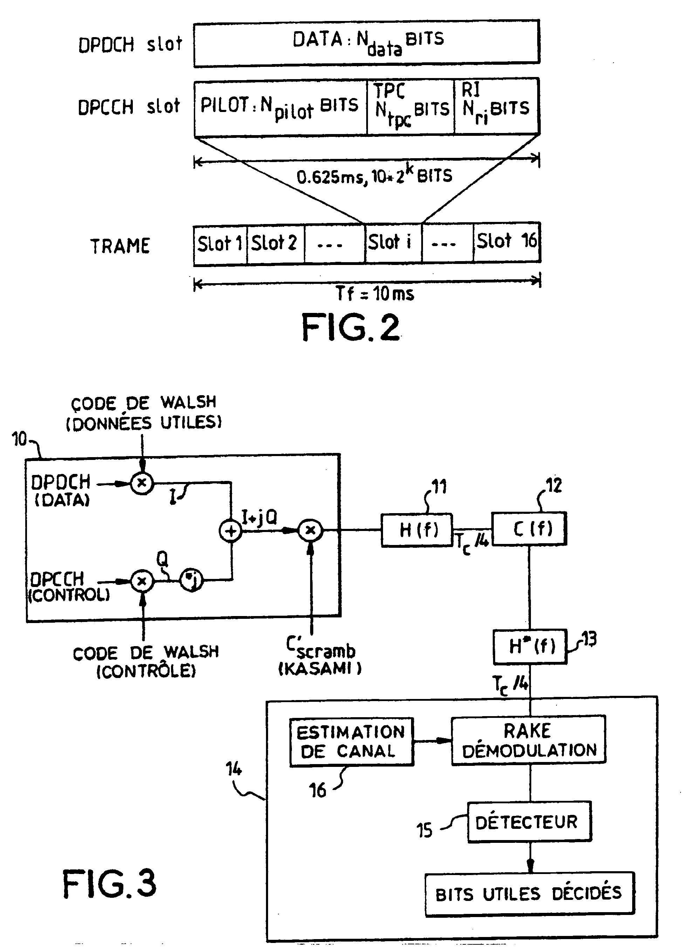

La figure 2 décrit une forme d'onde de type UTMS utilisée pour la liaison montante, c'est-à-dire d'une station mobile vers une station de base.

La structure de la trame de l'onde est composée par exemple de plusieurs slots Si ou créneaux temporels, i étant l'indice du slot.

Chaque créneau comporte les données utiles correspondant au slot DPDCH (en abrégé en anglais Dedicated Physical Data Channel) au nombre Ndata par exemple et les données de contrôle ou slot DPCCH (en abrégé en anglais Dedicated Physical Control Channel) qui sont transmises en parallèle via un multiplexage complexe sur voies en phase et en quadrature. Les données utiles sont transmises sur la voie « en phase » (voie I) (figure 3) et les données de contrôle sont transmises sur la voie « en quadrature » (voie Q) sur cette même figure 3.

Les données utiles et de contrôle sont modulées par exemple en BPSK (Binary Phase Shift Keying) et le signal obtenu après multiplexage est donc modulé en QPSK (Quadrature Phase Shift Keying).

Chaque trame, de durée 10 ms, est constituée par exemple de 16 créneaux temporels de durée 0.625 ms.

La séquence de contrôle schématisée sur la figure 2 est composée de Npilot bits connus du récepteur utilisés dans le procédé d'estimation de canal selon l'invention, de bits de commande servant au contrôle de puissance Ntpc bits, et de bits indiquant le débit utilisé sur le canal de données utiles Nri bits.

Le nombre de total de bits de contrôle est par exemple fixé à 10. La répartition numérique et la disposition de ces trois types de contrôle seront fixées par exemple par la norme UMTS exposée dans la référence [5] ETSI, « Universal Mobile Telecommunications System (UMTS) ; UMTS Terrestrial Radio Access (UTRA) ; Concept evaluation", UMTS 30.06 version 3.0.0, TR 101 146 V3.0.0 (1997-12).

Les bits de données utiles et de contrôle sont par exemple étalés par des codes orthogonaux de Walsh [5], de façon à rallier le débit chip ou impulsion à 4.096 MHz.

Le facteur d'étalement (ou gain d'étalement) utilisé pour les bits utiles est choisi par exemple en fonction de leur débit, plus le débit utile en entrée est faible, plus ce facteur d'étalement est faible.

En désignant par k le nombre de bits pour les canaux de données utiles (DPDCH) et de contrôle (DPCCH), il est relié au facteur d'étalement SF par la relation SF = $256/2^k$. Le facteur d'étalement peut donc prendre des valeurs comprises entre 256 et 4. Les facteurs d'étalement relatifs à la voie de données et à la voie de contrôle peuvent être différents dans la mesure où le nombre de bits ou de symboles véhiculés par créneau peuvent être différents.

La figure 3 représente un diagramme d'étalement, de modulation et d'embrouillage d'un signal. Après étalement par leurs code respectif, le signal est embrouillé par un code d'embrouillage primaire lié à la station mobile ($C'_{scramb}$). Le signal résultant peut, de façon optionnelle, être embrouillé une seconde fois par un code d'embrouillage secondaire ($C''_{scramb}$).

Le code d'embrouillage primaire est un code complexe généré à partir de séquences de KASAMI (ref) de longueur 256. Le code d'embrouillage secondaire a une longueur de 40960 chips (durée de 10 ms) et constitue un segment d'un code de Gold (ref) de longueur $2^{41}-1$.

Le signal émis à partir de la station mobile est mis en forme dans le bloc 10, il est ensuite transmis vers un filtre d'émission 11, puis il est reçu au niveau de la station de base. Cette station de base ou de réception comporte un filtre de réception 13 suivi d'un bloc de réception 14 comportant par exemple un récepteur 15 de type RAKE et des moyens tels qu'un microprocesseur 16 programmé pour mettre en oeuvre les étapes du procédé selon l'invention, afin d'estimer les paramètres du canal de propagation et démoduler les signaux numériques.

**Description des étapes mise en oeuvre au cours du procédé**

Le principe de l'invention est de démoduler les bits ou symboles utiles en utilisant un algorithme de démodulation se composant de deux parties, la première consiste à estimer le canal et la seconde à démoduler les symboles ou bits utiles. Les caractéristiques des canaux de propagation tels que l'étalement temporel, l'étalement Doppler peuvent être quelconque.

La seconde partie est effectuée selon l'algorithme RAKE connu de l'Homme du métier, des détails pouvant être trouvés dans la référence de Proakis précitée.

Selon l'invention, l'estimation du canal est réalisée en mettant en oeuvre un algorithme comportant au moins les trois étapes décrites ci-après.

Ces étapes sont effectuées par exemple par traitement du signal numérique reçu après filtrage adapté à la réception par la fonction de mise en forme des impulsions de type racine de Nyquist par exemple et correction d'un éventuel décalage Doppler.

**Première étape :**

Tous les créneaux temporels, toutes les $\Delta t_1$ secondes, par exemple tous les 0.62 ms, le procédé :

♦ estime l'amplitude complexe de tous les trajets sélectionnés, par corrélation avec la séquence de référence. Les trajets sélectionnés correspondent aux trajets retenus lors de la troisième étape ou pour l'initialisation de trajets sélectionnés en comparant l'énergie d'un trajet à une valeur seuil,
♦ démodule les bits utiles par recombinaison en phase de ces trajets.

**Deuxième étape**

Tous les K créneaux, toutes les $\Delta t_2$ secondes, le procédé effectue la mise à jour de l'énergie des trajets dont les retards appartiennent à la fenêtre de recherche avec un pas d'analyse donné. Cette étape alliée à la troisième étape permet de faire le suivi à long terme des trajets présents dans la fenêtre.

**Troisième étape :**

Tous les K*L créneaux, toutes les $\Delta t_3$ secondes, le procédé opère la mise à jour de la sélection des trajets prépondérants pris en compte pour la démodulation RAKE.

Les périodes de réalisation $\Delta t_1$, $\Delta t_2$, $\Delta t_3$ de ces étapes exprimées en seconde sont par exemple choisies pour vérifier la relation $\Delta t_1 > \Delta t_2 > \Delta t_3$.

Dans la suite de la description,

• Certaines étapes de l'algorithme, connues de l'Homme du métier ne sont pas détaillées (filtrage de Nyquist à la réception, gestion du flot de données, ...) ;
• On suppose que la correction d'un éventuel décalage Doppler est effectuée ;
• Les vecteurs et les matrices sont notés en gras ;
• X est le complexe conjugué du scalaire ou du vecteur X; $x^{\perp}{}^*y$ est le produit scalaire (euclidien ou hermitien) des vecteurs x et y ; le vecteur x décrit entre *indice_début* et *indice_fin* avec un pas *resol* est noté:

x(indice_début: indice_fin : resol)

A l'entrée de l'algorithme, le fichier d'échantillons est composé d'échantillons complexes obtenus après filtrage demi-Nyquist (émission) et suréchantillonnage du signal UMTS.

En sortie de l'algorithme, le fichier obtenu est composé d'un fichier de bits de données démodulés et desétalés (valeurs complexes). Ces bits sont prêts à être décidés par exemple selon le principe énoncé ci-dessus.

La liste des paramètres clé de l'invention et des variables utilisées dans la description algorithmique est donnée sous forme de deux tableaux 1 et 2 annexés.

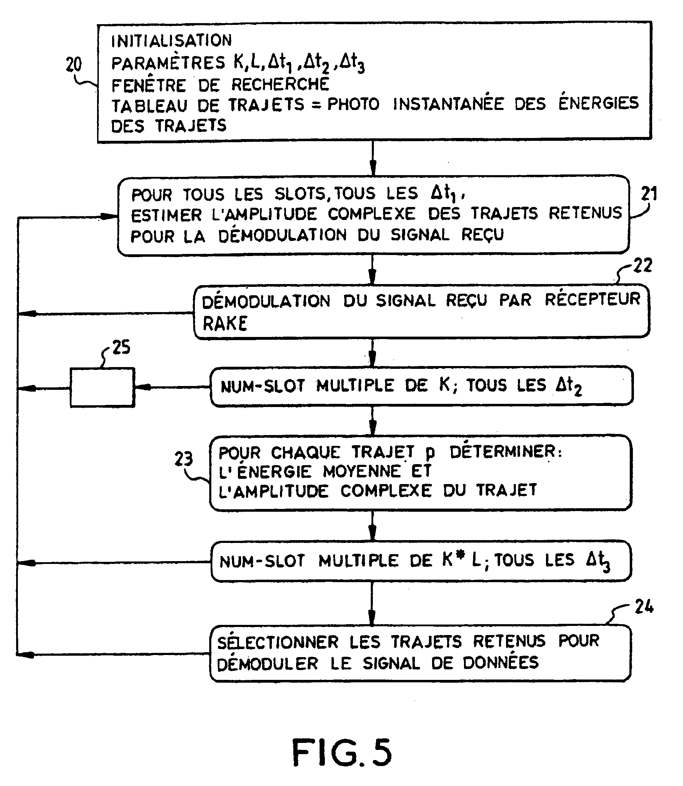

Le procédé se déroule suivant les étapes 21 à 27 de l'organigramme représenté à la figure 5. Ces étapes sont appliquées pour chaque créneau temporel c'est-à-dire toutes les $\Delta t_1$ secondes.

Le procédé commence par une étape d'initialisation 20 de différentes valeurs notamment :

la taille de la fenêtre de recherche exprimée en secondes et en échantillons : Taille_fen_rech, Etat_temp_max ; le facteur de sous-échantillonnage des retards Sous_ech_retard ; le facteur d'oubli λ, utilisé au cours de la deuxième étape, la valeur seuil Seuil_puissance pour la sélection des trajets lors de la troisième étape ; la fréquence de mise à jour des puissances K et le facteur de mise à jour des retards L.

Elle comporte aussi l'initialisation d'un tableau comprenant les trajets prépondérants déterminés par exemple en comparant l'énergie d'un trajet à la valeur seuil et en retenant uniquement les trajets dont l'énergie est supérieure à cette valeur seuil.

Les échantillons sont filtrés au moyen d'un filtrage de type demi-Nyquist par exemple.

Le procédé commence à l'étape 21 par un calcul de l'amplitude complexe des trajets retenus lors de la troisième étape. Les amplitudes complexes sont obtenues par exemple par corrélation entre les symboles pilote reçus (qui sont étalés) et le code relatif aux bits de contrôle (produit du code d'étalement et du code d'embrouillage primaire), l'élimination de la contribution des bits pilotes et le moyennage (par simple sommation des amplitudes estimées obtenues avec chacun des symboles ) sur les N_symbol pilotes ce qui permet notamment d'accroître le rapport signal/bruit.

Les corrélations effectuées prennent en compte, au niveau du signal des symboles pilote reçus, les temps de retard identifiés au cours de l'étape 3.

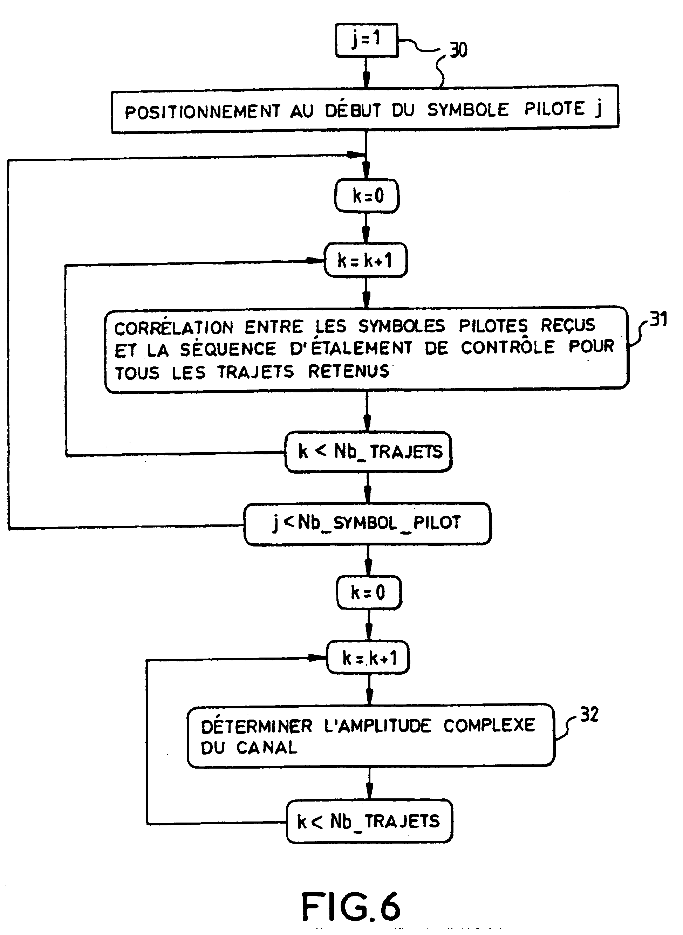

*L'estimation de l'amplitude complexe des trajets retenus pour la démodulation pour chaque symbole pilote est réalisée par l'enchaînement des étapes suivantes décrites en relation avec la figure 6*

*Etape 30*

Pour j = 1 à Nb_symbol_pilot

*Positionnement au début du symbole pilote numéro j*

Ind_debut_demod = Ind_centre_fen + (j - 1) * GE_contrôle * Nb_ech_chip

*Etape 31 -Calcul de la corrélation pour tous les trajets retenus*

Pour k = 1 à Nb_trajets

$$\mathbf{Correlation\_pilote}(k,j) = \mathbf{Code\_etal\_control}^{\perp} * \mathbf{Signal}(\text{Ind\_debut\_demod}$$
$$+\mathbf{Retards}(k)*\text{Sous\_ech\_retard}: \text{Ind\_debut\_demod}$$
$$+ \mathbf{Retards}(k)*\text{Sous\_ech\_retard} + (\text{GE\_control} - 1) * \text{Nb\_ech\_chip} :$$
$$\text{Nb\_ech\_chip}) * \mathbf{Seq\_symbol\_pilot}(j)^{*}$$

Fin « Pour k = 1 à Nb_trajets »

Fin « Pour j = 1 à Nb_symbol_pilot »

*Etape 32 Calcul de l'amplitude complexe du canal*

Pour k = 1 à Nb_trajets

$$Canal\_estimé(k) = \frac{1}{Nb\_symbols\_pilot} \sum_{j=1}^{Nb\_symbol\_pilot} Correlation\_pilote(k,j)$$

Fin « Pour k = 1 à Nb_trajets »

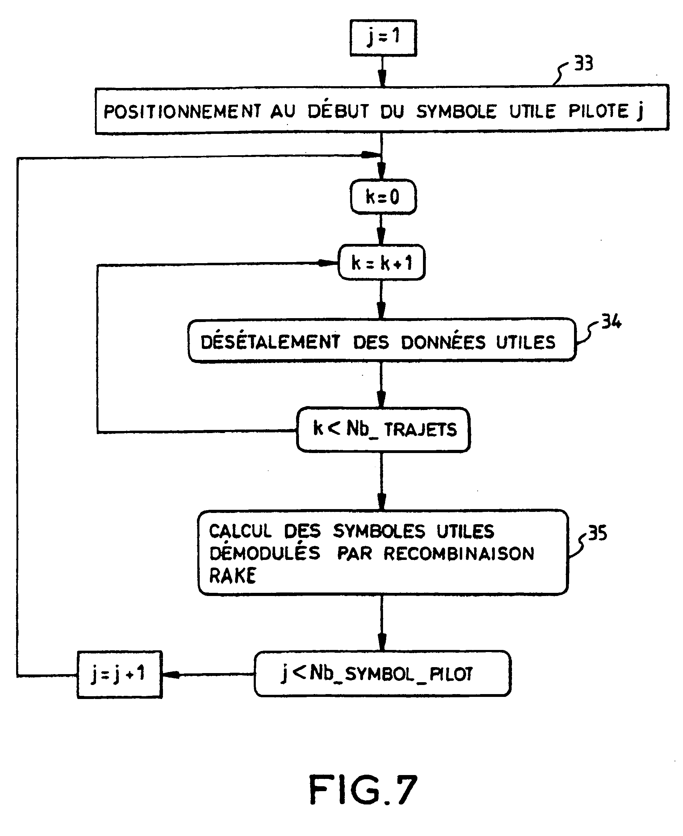

*L'étape 22* (figure 5) suivante est une étape de démodulation des symboles utiles comportant une étape de désétalement et de démodulation selon le principe RAKE, et le déroulement des étapes décrites ci-après et à la figure 7:

Pour j = 1 à Nb_symbol_data

*Etape 33 - Positionnement au début du symbol utile numéro j*

Ind_debut_demod = Ind_centre_fenetre + (j - 1) * GE_data * Nb_ech_chip

*Etape 34 - Desétalement*

Pour k = 1 à Nb_trajets

$$\mathbf{Correlation\_data}(k,j) = \mathbf{Code\_etal\_data}^{\perp}$$
$$* \quad \mathbf{Signal}(\mathrm{Ind\_debut\_demod} \quad +$$
$$\mathbf{Retards}(k)*\mathrm{Sous\_ech\_retard: Ind\_debut\_demod} + \mathbf{Retards}(k)*\mathrm{Sous\_ech\_retard} +$$
$$(\mathrm{GE\_control} - 1) * \mathrm{Nb\_ech\_chip : Nb\_ech\_chip})$$

Fin « Pour k = 1 à Nb_trajets »

*Etape 35 - Calcul des symboles utiles démodulés par recombinaison RAKE*

$$\mathbf{Symbol\_data\_demod}(j) = \mathbf{Canal\_estimé}(1 : \mathrm{Nb\_trajets})^{\perp} *$$
$$\mathbf{Correlation\_data}(1 : \mathrm{Nb\_trajets}, j)$$

Fin « Pour j = 1 à Nb_symbol_data »

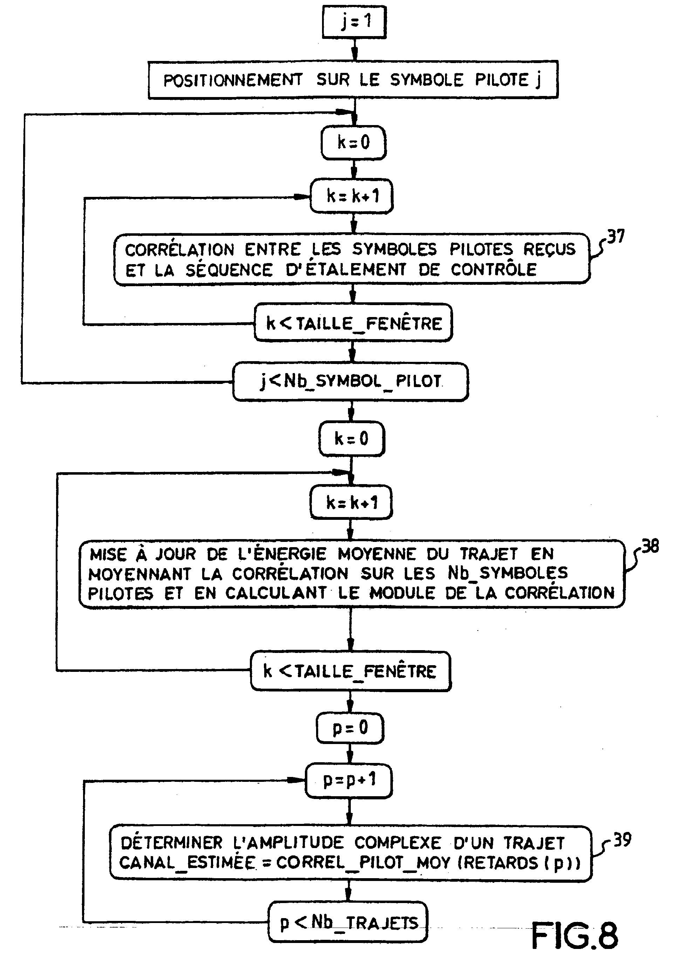

La deuxième étape du procédé réalisée tous les K créneaux, tous les $\Delta t_2$ secondes et correspondant à l'étape 23 (figure 5) consiste à mettre à jour l'énergie de chaque trajet situé dans la fenêtre de recherche et déterminer l'amplitude complexe du trajet. Ces deux étapes sont détaillées sur la figure 8.

Le procédé effectue (étape 37) la corrélation entre chaque symbole pilote reçu et le code de contrôle, pour tous les retards possible compris dans la fenêtre de recherche et avec une résolution donnée. La résolution varie par exemple entre la durée de l'échantillon et la durée du chip.

La fenêtre de recherche est par exemple centrée sur le centre courant de la réponse impulsionnelle du canal, le centre étant déterminé par exemple à l'étape 3, et sa taille étant égale au double de l'étalement temporel maximal pris en compte par l'algorithme.

Dans un second temps (étape 38), le procédé effectue une moyenne des amplitudes complexes estimées au niveau du symbole pilote, sur l'ensemble des symboles pilotes, de façon à augmenter la qualité de l'estimation, ceci pour tous les trajets possibles.

Enfin le procédé (étape 39) calcule la puissance instantanée C(k) de ces trajets (carré du module des amplitudes complexes) que l'on utilise pour obtenir la puissance moyenne $C_{long\_terme}(k)$, à l'aide de la formule suivante (filtrage passe-bas du premier ordre) :

$$C_{long\_terme}(k) = \lambda\, C_{long\_terme}(k) + C(k)$$

où $\lambda$ est un facteur d'oubli dont la valeur, à l'instar de celle du paramètre K, doit être choisie en fonction des caractéristiques du canal de propagation.

Ce lissage permet de s'affranchir du fading rapide, qui peut provoquer ponctuellement une chute de la puissance instantanée d'un trajet fort.

*Mise à jour de l'énergie de chaque trajet contenu dans la fenêtre de recherche*

*Cette mise à jour commence par la détermination d'un tableau, étape 37 contenant, pour tous les temps de retard possibles situés dans la fenêtre de recherche et pour chaque symbole pilote, les corrélations entre les symboles pilote reçus et la séquence d'étalement de contrôle*

Pour j = 1 à Nb_symbole_pilot

*Positionnement sur le symbol pilote numéro j*

Ind_debut_demod = Ind_centre_fenetre + (j-1) * GE_contrôle * Nb_ech_chip

*Corrélation entre les symboles pilotes reçus et la séquence de contrôle*
Pour k = 1 to Taille_fen_rech

$$\textbf{Correlation\_pilote}(\text{k.j}) = \textbf{Code\_etal\_control}^{\perp}$$

$$* \;\; \textbf{Signal}(\text{Ind\_debut\_demod} \; + \; \text{k*Sous\_ech\_retard: Ind\_debut\_demod} \; + \; \text{k*Sous\_ech\_retard} \; + \; (\text{GE\_control} \; - \; 1) \; * \; \text{Nb\_ech\_chip} \; : \; \text{Nb\_ech\_chip}) \; *$$
$$\textbf{Seq\_symbole\_pilot}(\text{j})^{*}$$

Fin « Pour k = 1 to Taille_fen_rech »
Fin « Pour j = 1 à Nb_symbole_pilot »

*L'étape suivante 38 consiste pour chaque trajet dans la fenêtre de recherche à faire la moyenne des corrélations sur les Nb_symboles_pilot, à calculer le module de la corrélation et à mettre à jour l'énergie moyenne du trajet.*
Pour k = 1 à Taille_fen_rech

$$Correl\_pilot\_moy(k) = \frac{1}{Nb\_symbol\_pilot} \sum_{j=1}^{Nb\_symbol\_pilot} Correlation\_pilote(k,j)$$

$$\textbf{Puiss\_inst\_trajet}(k) = \text{module}(\textbf{Correl\_pilot\_moy}(k))$$

$$\textbf{Puiss\_moy\_trajet}(k) = \lambda * \textbf{Puiss\_moy\_trajet}(k) + \textbf{Puiss\_inst\_trajet}(k)^{2}$$

Fin «Pour k = 1 à Taille_fen_rech»

*L'étape 39 suivante correspond au calcul de l'amplitude complexe du canal*
Pour p = 1 à Nb_trajets

$$\textbf{Canal\_estimé}(p) = \textbf{Correl\_pilot\_moy}(\text{Retards}(p))$$

Fin « Pour p = 1 à Nb_trajets »

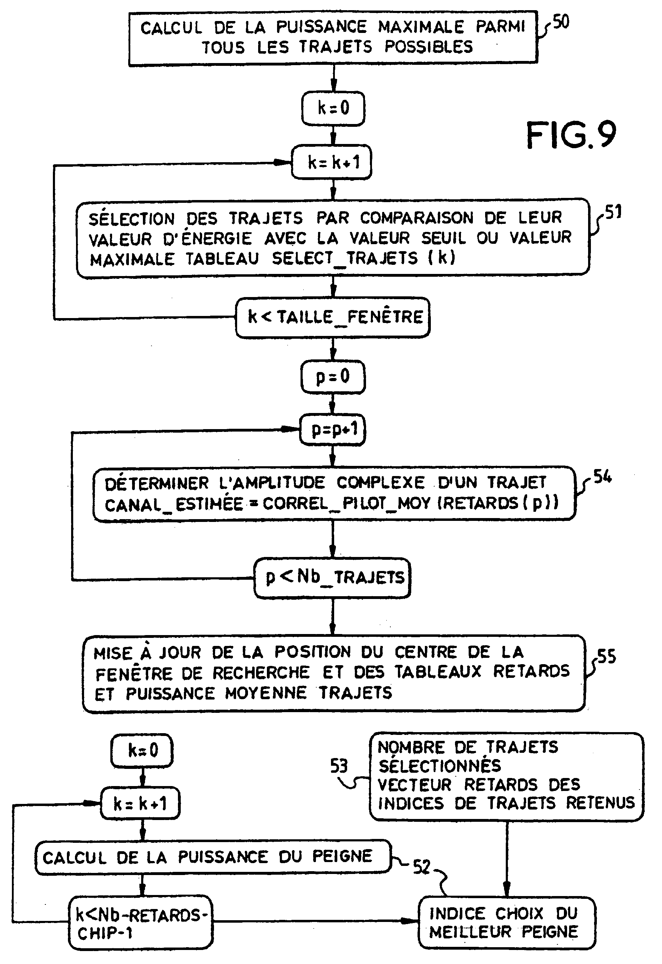

L'étape 3 ou troisième étape du procédé est réalisée tous les K*L créneaux, tous les $\Delta t_3$ secondes par exemple en déroulant détaillées à la figure 9 composant l'étape 24 de mise à jour des trajets prépondérants qui sont utilisés lors de la première étape du procédé pour démoduler les signaux reçus.

Le déroulement de ces étapes commence par exemple de la façon suivante :une étape 50 de calcul de la puissance moyenne maximale, suivie d'une étape 51 de sélection de tous les trajets pour lesquels le rapport entre leur puissance moyenne et la puissance moyenne dépasse un seuil, par exemple 0.5.

Selon une variante de mise en oeuvre du procédé, après la sélection des trajets (étape 51), le procédé continue par une étape 52 de choix du meilleur peigne d'échantillonnage, les trajets retenus in fine sont séparés par un nombre entier de chips.

A partir des trajets sélectionnés, le procédé détermine par exemple ensuite à l'aide d'étapes et de méthodes connus de l'Homme du métier le nombre de trajets sélectionnés sur le meilleur peigne et le vecteur Retards des indices des trajets retenus, étape 53.

L'étape 54 consiste à calculer l'amplitude complexe des trajets sélectionnés.

L'étape 55 suivante comprend une mise à jour du centre de la fenêtre de recherche, des tableaux contenant les valeurs des retards et des puissances moyennes pour les trajets sélectionnés.

*Mise à jour du choix des trajets retenus pour la démodulation*

*Etape 50 - Calcul de la puissance moyenne maximale (parmi tous les trajets possibles)*

$$\text{Puiss\_moy\_max} = \text{MAX}(\textbf{Puiss\_moy\_trajet})$$

*Etape 51 - Sélection des trajets dont la puissance moyenne dépasse le seuil*
Pour k = 1 à Taille_fen_rech

$$\text{SI} ( \textbf{Puiss\_moy\_trajet} (k) > \text{Puiss\_moy\_max} * \text{Seuil\_puissance})$$
$$\text{Alors } \textbf{Selec\_trajets}(k) = \textbf{Puiss\_moy\_trajet} (k)$$
$$\text{Sinon } \textbf{Selec\_trajets}(k) = 0$$
$$\text{FIN SI}$$

Fin « Pour k = 1 à Taille_fen_rech »
*Etape 52 - Détermination du meilleur peigne d'échantillonnage*
*Dans un premier temps calcul de la puissance moyenne cumulée sur tous les trajets dépassant le seuil et situé sur le même peigne d'échantillonnage (les trajets d'un peigne donné sont séparés d'un nombre entier de chips)*
Nb_retard_chip = Nb_ech_chip / Sous_ech_retard
Pour k = 1 à Nb_retard_chip - 1

$$\text{Puiss\_tot\_peigne}(k) = \sum_{p=0}^{\text{Taille\_fen\_rech}} \text{Selec\_trajets}(k + p * \text{Nb\_retard\_chip})$$

Fin « Pour k = 1 à Nb_retard_chip - 1 »
Puis dans un second temps le choix du meilleur peigne d'échantillonnage en déterminant la puissance totale cumulée maximale :

$$\text{Ind\_meilleur\_peigne} = \text{ARG}(\text{MAX}(\textbf{Puiss\_tot\_peigne}))$$

*Etape 53 - à partir des trajets sélectionnés, le procédé calcule à l'aide d'étapes connues de l'Homme du métier*

* *le nombre Nb_trajets de trajets sélectionnés sur le meilleur peigne, qu'il peut comparer à un nombre déterminé par exemple Nb_trajets_max, et*
* *le vecteur **Retards**(1:Nb_trajets) des indices des trajets retenus sur le meilleur peigne.*

Le procédé calcule ensuite lors de l'étape 54 et pour les trajets sélectionnés à l'étape 52
*L'amplitude complexe ou l'estimée du canal courant*
Pour p = 1 à Nb_trajets

$$\textbf{Canal\_estimé}(p) = \textbf{Correl\_pilot\_moy}(\text{Retards}(p))$$

Fin « Pour p = 1 à Nb_trajets »
*L'étape 55 comprend la mise à jour du centre de la réponse impulsionnelle du canal courant de façon à mettre à jour la position du centre de la fenêtre de recherche par un calcul du retard moyen :*

$$Retard\_moyen = 0.5 * (\mathbf{Retards}(1) + \mathbf{Retards}(Nb\_trajets))$$

*Et la mise à jour des tableaux* **Retards** *et Puiss_moy_trajet ainsi que la mise à jour de l'indice du centre de la fenêtre de recherche Ind_centre_fenetre*

$$\mathbf{Retards}(1 : Nb\_trajets) = \mathbf{Retards}(1 : Nb\_trajets) - Retard\_moyen$$
$$Ind\_centre\_fenetre = Ind\_centre\_fenetre + Retard\_moyen * Sous\_ech\_retard$$

Dans le cas où le paramètre Num_slot n'est pas un multiple de K*L, le procédé traite le créneau temporel ou slot à l'aide de méthode connue de l'Homme du métier pour déterminer l'amplitude et la phase de chacun des trajets au cours de l'étape 26 figure 5 avant d'effectuer les étapes 21 et 22.

Les paramètres K, L, $\Delta t_1$, $\Delta t_2$, $\Delta t_3$ ainsi que les autres paramètres internes, notamment la taille de la fenêtre de recherche, le pas de recherche des retards considérés dans la seconde étape, le nombre maximum de trajets pris en compte pour la recombinaison RAKE, le seuil pour la sélection des trajets doivent être choisis en fonction des caractéristiques du canal de propagation et le compromis performances/complexité numérique à respecter.

Sans sortir du cadre de l'invention, la séquence d'apprentissage ou de référence est émise de manière séquentielle ou de manière parallèle à celle des données utiles.

De même sans sortir du procédé selon l'invention, le canal est par exemple estimé plusieurs fois par créneau temporel, l'étape d'estimation de l'amplitude complexe étant réalisée en utilisant un nombre de symboles d'apprentissage inférieur au nombre total de symboles d'apprentissage disponibles sur un créneau temporel. Ce mode de mise en oeuvre du procédé est particulièrement intéressant pour des canaux fluctuants très rapidement.

Il est également possible de faire de l'interpolation, de façon à disposer à tout moment d'une estimation d'un canal (filtrage linéaire à partir de plusieurs valeurs estimées du canal).

Le procédé comporte par exemple une étape de décision des bits démodulés, ces bits décidés pouvant être utilisés pour améliorer l'estimation du canal.

Les symboles d'apprentissage peuvent être consécutifs ou être distants dans le temps. Par exemple, d'autres symboles de contrôle peuvent être insérés entre les symboles d'apprentissage.

Exemple de séquence de contrôle :

```
-------___----- ====== -------
```
--- : symboles d'apprentissage
_: autre type de symbole de contrôle (type 1)
=== : autre type de symbole de contrôle (type 2)

L'estimation du canal est obtenue par exemple par simple corrélation des symboles pilotes reçus avec la séquence d'apprentissage étalée, ce qui suppose implicitement que la séquence d'apprentissage étalée est blanche, sa fonction d'auto-corrélation étant un Dirac.

Il est aussi possible de tenir compte du caractère non idéal de la séquence d'apprentissage en corrélant les symboles pilote reçus avec une version blanchie de la séquence d'apprentissage.

Selon une autre variante de mise en oeuvre du procédé, les trajets retenus lors de la troisième étape ne sont pas séparés d'un nombre entier de durée chips.

ANNEXE

Liste des paramètres clé de l'invention et des variables utilisées dans la description algorithmique.

### Tableau 1 : Paramètres clé de l'algorithme

| NOM | Type de donnée | Description | Valeur typique |
|---|---|---|---|
| Nb_symbole_pilot | ENTIER | Nombre de symboles pilote | 8 |
| Nb_symbole_data | ENTIER | Nombre de symboles utiles | Fonction du débit |
| GE_controle | ENTIER | Gain d'étalement voie contrôle | 256 |
| GE_data | ENTIER | Gain d'étalement voie data | Fonction du débit |
| Nb_ech_chip | ENTIER | Nombre d'échantillons par chip | 2 ou 4 |
| Etal_temp_m ax | REEL | Taille de la fenêtre de recherche (secondes) | $20.10^{-6}$(1) |
| Sous_ech_retard | ENTIER | Facteur de sous-échantillonnage des retards | 1 / 2 / 4 (2) |
| Taille_fen_rech | ENTIER | Taille de la fenêtre (échantillons) | 656 (3) |
| $\lambda$ | REEL | Facteur d'oubli (mise à jour des puissances des trajets) | 0.95 |
| Seuil_puissance | REEL | Seuil pour la sélection des trajets | 0.5 (4) |
| K | ENTIER | Fréquence de mise à jour des puissances | 5 (fonction du canal) (5) |
| L | ENTIER | Fréquence de mise à jour des retards | 5 (fonction du canal) (6) |

(1) : Valeur maximale de l'étalement temporel du canal radiomobile en milieu urbain.

(2) : La résolution temporelle lors de la recherche des trajets est égale à $T_c$/(Nb_ech_chip/ Sous_ech_retard) où $T_c$ est la durée du chip. Les valeurs possibles de la résolution temporelle de recherche des trajets sont $T_c$ /2, $T_c$ /4 et $T_c$.

(3) : Cette valeur représente le nombre de temps de retard considérés dans la fenêtre de recherche. Elle vaut : Taille_fen_rech=2*(1/$T_c$)*Etal_temp_max*(Nb_ech_chip/Sous_ech_retard) (656 = 2 * $4.096.10^6$ * $20.10^{-6}$ * 4/1)

(4) : Cette valeur signifie que tout trajet de propagation dont la puissance moyenne est supérieure à la moitié de la puissance moyenne maximale, est sélectionné.

(5) : Ce chiffre est exprimé en nombre de créneaux temporels (voir paragraphe 2.2.1).

(6) : Ce chiffre est exprimé dans une unité égale à K fois la durée du créneau temporel (ainsi, les temps de retard sont mis à jour tous les K*L créneaux).

### Tableau 2 : Variables utilisées dans la description algorithmique

| NOM | Type de donnée | Dimension | Description |
|---|---|---|---|
| Num_slot | ENTIER | 1 | Numéro de slot |
| Correlation_pilote | COMPLEXE | Taille_fen_rech * Nb_symbole_ pilot | Corrélation code de contrôle / symboles pilote |
| Ind_centre_fenetre | ENTIER | 1 | Indice du centre de la fenêtre de recherche |
| Ind_debut_demod | ENTIER | 1 | Indice de début de démodulation |
| Code_etal_control | ENTIER | GE_contrôle | Code d'étalement de contrôle |
| Code_etat_data | ENTIER | GE_data | Code d'étalement des data |
| Seq_symbole_pilote | ENTIER | Nb_symbole_ pilot | Séquence des symboles pilote |
| Signal | COMPLEXE | - | Signal complexe reçu |
| Correl_pilot_moy | COMPLEXE | Taille_fen_rech | Moyenne des corrélations pilote |
| Nb_trajets | ENTIER | 1 | Nombre de trajets sélectionnés |
| Retards | ENTIER | Variable | Retards des trajets sélectionnés |
| Canal_estimé | COMPLEXE | Variable | Canal estimé courant |
| Puiss_inst_trajet | REEL | Taille_ren_rech | Puissance instantanée des trajets |

(suite)

| NOM | Type de donnée | Dimension | Description |
|---|---|---|---|
| Puiss_moy_trajet | REEL | Taille_fen_rech | Puissance moyenne des trajets |
| Puiss_moy_max | REEL | 1 | Puissance moyenne maximale |
| Selec_trajets | REEL | Taille_fen_rech | Indicateur de sélection des trajets |
| Nb_retard_chip | ENTIER | 1 | Nombre de retards scrutés par chip |
| Puiss_tot_peigne | REEL | Nb_retard_chip | Puissance totale par peigne |
| Ind_meilleur_peigne | ENTIER | 1 | Indice du meilleur peigne |
| Retard_moyen | ENTIER | 1 | Retard moyen courant |
| Correlation_data | COMPLEXE | Nb_trajets* Nb_bits_data | Corrélation code de data / bits data |
| symboles_data_demod | REEL | Nb_symbol_data | symboles utiles démodulés |

**Revendications**

1. Procédé d'estimation d'un canal de propagation, entre une source d'émission de données et un récepteur, en utilisant au moins une séquence d'apprentissage comportant des symboles dits « symboles pilotes » et connue du récepteur, pour décoder un signal de données (signal numérique), les signaux étant transmis par trames successives, chaque trame étant partitionnée en un nombre déterminé de créneaux temporels **caractérisé en ce qu'**il comporte au moins les étapes suivantes :

   a) choisir une fenêtre de recherche, estimer l'amplitude complexe et l'énergie de chaque trajet prépondérant k situé dans la fenêtre de recherche pendant la durée de chacun des créneaux temporels et démoduler les bits de données (bits utiles), k étant correspondant à un indice du symbole,
   b) mettre à jour l'énergie des trajets dont les retards appartiennent à une fenêtre de recherche avec un pas d'analyse possible de la fenêtre de recherche tous les K créneaux, correspondant à un intervalle temporel,
   c) sélectionner ,tous les K*L créneaux, les trajets k d'énergie prépondérants, L est le facteur de mise à jour des retards.

2. Procédé selon la revendication 1 **caractérisé en ce que** le signal est un signal étalé selon un code d'étalement donné et **en ce qu'**il comporte au moins :

   pour l'étape b) :

   • la détermination de l'énergie ou puissance moyenne (Puiss_moy_trajet (k)) pour chaque trajet k de la fenêtre de recherche par corrélation entre les symboles pilotes reçus et la séquence d'étalement de contrôle, la moyenne (Correl_pilot_moy (k)) desdites corrélations sur l'ensemble des symboles de la séquence d'apprentissage, le calcul du module de la corrélation et la mise à jour de l'énergie moyenne du trajet (Puiss_moy_trajet (k)) par un calcul du type puissance moyenne instantanée égale à la somme de la puissance instantanée desdits trajets et d'un terme correspondant au produit du facteur d'oubli et de la puissance moyenne,
   • la détermination de l'amplitude complexe (Canat_estimé_(p)) dudit canal p par corrélation entre les symboles pilotes et la séquence d'étalement.

   pour l'étape c) :

   • la sélection de trajets de propagation k en comparant l'énergie moyenne d'un trajet (Puiss_moy_trajet(k)) à une valeur seuil fixée (Puiss_moy_max), telle que la puissance maximale de tous les trajets,
   • la détermination de l'amplitude complexe du canal p de propagation (Canalestimé(p)).

**3.** Procédé selon l'une des revendications 1 ou 2 **caractérisé en ce qu'**il comporte après l'étape de sélection des trajets, une étape de détermination du meilleur peigne d'échantillonnage (Ind_meilleur_peigne) en l'argument de la puissance totale cumulée maximale sur tous les trajets dépassant la valeur seuil pour tous les trajets séparés d'un nombre entier de chips et en déterminant la puissance maximale cumulée.

**4.** Procédé selon l'une des revendications précédentes **caractérisé en ce qu'**il comporte à l'étape c) une étape de comparaison du nombre de trajets (Nb-trajets) sélectionnés à une valeur maximale et/ou la mise à jour de la puissance moyenne des trajets (Puiss_moy_trajet )et de l'indice du centre de le fenêtre de recherche (Ind_centre_fenetre) et le vecteur des retards des indices des trajets.

**5.** Procédé selon l'une des revendications 1 à 4 **caractérisé en ce que**

• K est fixé est un multiple de la durée du créneau temporel, et/ou
• K*L est déterminé à partir de la vitesse de variation des trajets dans le temps.

**6.** Procédé selon l'une des revendications précédentes, **caractérisé en ce qu'**il comporte une étape de détermination de bits décidés effectuée après la démodulation des bits de données ou bits utiles.

**7.** Procédé selon l'une des revendications précédentes, **caractérisé en ce que** la séquence d'apprentissage est émise de manière séquentielle ou de manière parallèle à celle des données utiles.

**8.** Dispositif pour estimer les paramètres d'un canal de propagation de signaux numériques entre un moyen d'émission et un moyen de réception afin de démoduler un signal de données (signal numérique), les signaux étant transmis par trames successives, chaque trame étant partitionnée en un nombre déterminé de créneaux temporels les données utiles reçues, **caractérisé en ce qu'**il comporte un microprocesseur (16) adapté pour mettre en oeuvre le procédé selon l'une des revendications 1 à 7.

**9.** Dispositif selon la revendication 8, **caractérisé en ce que** ledit moyen d'émission comporte un moyen permettant l'étalement du signal numérique et ledit moyen de réception comporte un récepteur de type RAKE.

**10.** Application du procédé selon la revendication 1 pour démoduler un signal numérique à bande étalée.

**11.** Application du procédé selon la revendication 1 pour démoduler un signal de type CDMA, ou de type UMTS.

**Claims**

**1.** Method for estimating a propagation channel, between a data sending source and a receiver, by using at least one training sequence which comprises symbols termed "pilot symbols" and is known to the receiver, to decode a data signal (digital signal), the signals being transmitted by successive frames, each frame being partitioned into a determined number of time slots, **characterized in that** it comprises at least the following steps:

a) choosing a search window, estimating the complex amplitude and the energy of each predominant path k situated in the search window for the duration of each of the time slots and demodulating the data bits (useful bits), k corresponding to an index of the symbol,
b) updating the energy of the paths whose delays belong to a search window with a possible analysis span of the search window every K slots, corresponding to a time interval,
c) selecting, every K*L slots, the predominant energy paths k, L is the updating factor for the delays.

**2.** Method according to Claim 1, **characterized in that** the signal is a signal spread according to a given spreading code and **in that** it comprises at least:

for step b):

• the determination of the average power or energy (Power_avg_path(k)) for each path k of the search window by correlation between the pilot symbols received and the control spreading sequence, the average (Correl_pilot_avg(k)) of said correlations over the set of symbols of the training sequence, the calculation of the modulus of the correlation and the updating of the average energy of the path (Power_avg_path(k)) by a calculation of the instantaneous average power type equal to the sum of the instantaneous power of said paths and of a term corresponding to the product of the forget factor and the average power,
• the determination of the complex amplitude (Channel_estimated_(p)) of said channel p by correlation between the pilot symbols and the spreading sequence.

for step c):

• the selection of propagation paths k by comparing the average energy of a path (Power_avg_path(k)) with a fixed threshold value (Power_avg_max), such as the maximum power of all the paths,
• the determination of the complex amplitude of the propagation channel p (Channel_estimated(p)).

3. Method according to one of Claims 1 or 2, **characterized in that** it comprises after the step of selecting the paths, a step of determining the best sampling comb (Ind_best_comb) as the argument of the maximum total power aggregated over all the paths exceeding the threshold value for all the paths separated by an integer number of chips and by determining the aggregated maximum power.

4. Method according to one of the preceding claims, **characterized in that** it comprises in step c) a step of comparing the number of paths (Nb_paths) selected with a maximum value and/or the update of the average power of the paths (Power_avg_path) and of the index of the centre of the search window (Ind_centre_window) and the vector of the delays of the indices of the paths.

5. Method according to one of Claims 1 to 4, **characterized in that**

• K is fixed is a multiple of the duration of the time slot, and/or
• K*L is determined on the basis of the rate of variation of the paths over time.

6. Method according to one of the preceding claims, **characterized in that** it comprises a step of determining decided bits, performed after demodulation of the data bits or useful bits.

7. Method according to one of the preceding claims, **characterized in that** the training sequence is sent in a manner that is sequential or in a manner parallel to that of the useful data.

8. Device for estimating the parameters of a propagation channel for propagating digital signals between a sending means and a receiving means so as to demodulate a data signal (digital signal), the signals being transmitted by successive frames, each frame being partitioned into a determined number of time slots of the useful data received, **characterized in that** it comprises a microprocessor (16) adapted for implementing the method according to one of Claims 1 to 7.

9. Device according to Claim 8, **characterized in that** said sending means comprises a means allowing the spreading of the digital signal and said receiving means comprises a receiver of RAKE type.

10. Application of the method according to Claim 1 for demodulating a spread band digital signal.

11. Application of the method according to Claim 1 for demodulating a signal of CDMA type, or of UMTS type.

**Patentansprüche**

1. Verfahren zur Schätzung eines Ausbreitungskanals zwischen einer Datensendequelle und einem Empfänger, wobei mindestens eine Lernsequenz verwendet wird, die so genannte "Pilotsymbole" umfasst und dem Empfänger bekannt ist, um ein Datensignal (digitales Signal) zu decodieren, wobei die Signale von aufeinander folgenden Rastern übertragen werden, wobei jeder Raster in eine bestimmte Anzahl von Zeiteinheiten unterteilt ist, **dadurch gekennzeichnet, dass** es mindestens die folgenden Schritte umfasst:

a) Auswahl eines Suchfensters, Schätzung der komplexen Amplitude und Energie jeder vorherrschenden Bahn k, die sich in dem Suchfenster während der Dauer jeder der Zeiteinheiten befindet, und Demodulation der Datenbit (Nutzbit), wobei k einem Index des Symbols entspricht,
b) Aktualisierung der Energie der Bahnen, deren Verzögerungen einem Suchfenster angehören, mit einem möglichen Analyseschritt des Suchfensters alle K Zeiteinheiten entsprechend einem Zeitintervall,
c) Auswahl alle K*L Zeiteinheiten der vorherrschenden Energiebahnen k, wobei L der Aktualisierungsfaktor der Verzögerungen ist.

**2.** Verfahren nach Anspruch 1, **dadurch gekennzeichnet, dass** das Signal ein nach einem gegebenen Erweiterungscode erweitertes Signal ist, und dass es mindestens umfasst:

für Schritt b):

* die Bestimmung der durchschnittlichen Energie oder Leistung (Puiss_moy_trajet(k)) für jede Bahn k des Suchfensters durch Korrelation zwischen den empfangenen Pilotsymbolen und der Kontrollerweiterungssequenz, Durchschnitt (Correl_pilot_moy(k)) der Korrelationen über die Gesamtheit der Symbole der Lernsequenzen, Berechnung des Moduls der Korrelation und Aktualisierung der durchschnittlichen Energie der Bahn (Puiss_moy_trajet(k)) durch Berechnung des durchschnittlichen momentanen Leistungstyps gleich der Summe der momentanen Leistung der Bahnen und eines Terms entsprechend dem Produkt des Vergessensfaktors und der durchschnittlichen Leistung,
* Bestimmung der komplexen Amplitude (Canal_estime_(p)) des Kanals p durch Korrelation zwischen den Pilotsymbolen und der Erweiterungssequenz,

für Schritt c):

* Auswahl von Ausbreitungsbahnen k durch Vergleichen der durchschnittlichen Energie einer Bahn (Puiss_moy_trajet(k)) mit einem festgelegten Schwellenwert (Puiss_moy_max), wie beispielsweise die maximale Leistung aller Bahnen,
* Bestimmung der komplexen Amplitude des Ausbreitungskanals p (Canal-estimé(p)).

**3.** Verfahren nach einem der Ansprüche 1 oder 2, **dadurch gekennzeichnet, dass** es nach dem Auswahlschritt der Bahnen einen Schritt der Bestimmung des besten Bemusterungskamms (Ind_meilleur_peigne) mit dem Argument der maximalen kumulierten Gesamtleistung über alle Bahnen, die den Schwellenwert überschreiten, für alle Bahnen, die von einer ganzen Chipzahl getrennt sind, umfasst, wobei die kumulierte Maximalleistung bestimmt wird.

**4.** Verfahren nach einem der vorhergehenden Ansprüche, **dadurch gekennzeichnet, dass** es in Schritt c) einen Schritt des Vergleichens der Anzahl von ausgewählten Bahnen (Nb-Bahnen) mit einem Maximalwert und/oder die Aktualisierung der durchschnittlichen Leistung der Bahnen (Puiss_moy_trajet) und des Indexes des Zentrums des Suchfensters (Ind_centre_fenetre) und des Vektors der Verzögerungen der Indices der Bahnen umfasst.

**5.** Verfahren nach einem der Ansprüche 1 bis 4, **dadurch gekennzeichnet, dass**

* K festgelegt und ein Vielfaches der Dauer der Zeiteinheit ist, und/oder
* K*L aus der Variationsgeschwindigkeit der Bahnen mit der Zeit bestimmt wird.

**6.** Verfahren nach einem der vorhergehenden Ansprüche, **dadurch gekennzeichnet, dass** es einen Schritt der Bestimmung von entschiedenen Bits umfasst, der nach der Demodulation der Datenbit oder Nutzbit erfolgt.

**7.** Verfahren nach einem der vorhergehenden Ansprüche, **dadurch gekennzeichnet, dass** die Lernsequenz sequentiell oder parallel zu jener der Nutzdaten entsandt wird.

**8.** Vorrichtung zum Schätzen der Parameter eines Ausbreitungskanals von digitalen Signalen zwischen einem Sendemittel und einem Empfangsmittel, um ein Datensignal (digitales Signal) zu demodulieren, wobei die Signale durch aufeinander folgende Raster übertragen werden, wobei jeder Raster in eine bestimmte Anzahl von Zeiteinheiten der empfangenen Nutzdaten unterteilt ist, **dadurch gekennzeichnet, dass** sie einen Mikroprozessor (16) umfasst, der dazu ausgeführt ist, das Verfahren nach einem der Ansprüche 1 bis 7 einzusetzen.

**9.** Vorrichtung nach Anspruch 8, **dadurch gekennzeichnet, dass** das Sendemittel ein Mittel umfasst, das die Erweiterung des digitalen Signals ermöglicht, und dass das Empfangsmittel einen Empfänger des Typs RAKE umfasst.

**10.** Anwendung des Verfahrens nach Anspruch 1 zum Demodulieren eines digitalen Signals mit erweitertem Band.

**11.** Anwendung des Verfahrens nach Anspruch 1 zum Demodulieren eines Signals des Typs CDMA oder des Typs UMTS.

FIG.1

DPDCH slot | DATA : $N_{data}$ BITS

DPCCH slot | PILOT : $N_{pilot}$ BITS | TPC $N_{tpc}$ BITS | RI $N_{ri}$ BITS

0.625ms, $10*2^k$ BITS

TRAME | Slot 1 | Slot 2 | ... | Slot i | ... | Slot 16

$Tf = 10ms$

## FIG.2

CODE DE WALSH
(DONNÉES UTILES)

10

DPDCH
(DATA) ×  I

I+jQ  ×  +

DPCCH
(CONTROL) ×  Q  (·j)

CODE DE WALSH
(CONTRÔLE)

$C'_{scramb}$
(KASAMI)

11  H(f)  $T_c/4$

12  C(f)

13  H*(f)

$T_c/4$

14

ESTIMATION
DE CANAL

16

RAKE
DÉMODULATION

15  DÉTECTEUR

BITS UTILES DÉCIDÉS

## FIG.3

FIG.4

**FIG.5**

j = 1 — 30

POSITIONNEMENT AU DÉBUT DU SYMBOLE PILOTE j

k = 0

k = k + 1

CORRÉLATION ENTRE LES SYMBOLES PILOTES REÇUS ET LA SÉQUENCE D'ÉTALEMENT DE CONTRÔLE POUR TOUS LES TRAJETS RETENUS — 31

k < Nb_TRAJETS

j < Nb_SYMBOL_PILOT

k = 0

k = k + 1

DÉTERMINER L'AMPLITUDE COMPLEXE DU CANAL — 32

k < Nb_TRAJETS

# FIG.6

FIG.7

FIG.8

CALCUL DE LA PUISSANCE MAXIMALE PARMI TOUS LES TRAJETS POSSIBLES ~50

FIG.9

k = 0

k = k + 1

SÉLECTION DES TRAJETS PAR COMPARAISON DE LEUR VALEUR D'ÉNERGIE AVEC LA VALEUR SEUIL OU VALEUR MAXIMALE TABLEAU SELECT_TRAJETS ( k ) ~51

k < TAILLE_FENÊTRE

p = 0

p = p + 1

DÉTERMINER L'AMPLITUDE COMPLEXE D'UN TRAJET CANAL_ESTIMÉE = CORREL_PILOT_MOY (RETARDS ( p )) ~54

p < Nb_TRAJETS

MISE À JOUR DE LA POSITION DU CENTRE DE LA FENÊTRE DE RECHERCHE ET DES TABLEAUX RETARDS ET PUISSANCE MOYENNE TRAJETS ~55

k = 0

k = k + 1

CALCUL DE LA PUISSANCE DU PEIGNE ~52

k < Nb-RETARDS-CHIP-1

53 NOMBRE DE TRAJETS SÉLECTIONNÉS VECTEUR RETARDS DES INDICES DE TRAJETS RETENUS

INDICE CHOIX DU MEILLEUR PEIGNE

**EP 1 260 071 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5544156 A

**Littérature non-brevet citée dans la description**

- **W.C.Y. LEE.** Overview of cellular CDMA. *IEEE Transactions on vehicular technology,* 02 Mai 1991, vol. 40
- **R.L. PICKHOLTZ ; D.L. SHILLING ; L.B. MILSTEIN.** Theory of spread-spectrum communications - A tutorial. *IEEE Transactions on communications,* Mai 1982, vol. 30 (5), 855-884
- **J.G. PROAKIS.** Digital communications. McGraw Hill

- **J.G.PROAKIS.** Digital communications. McGraw Hill
- **D.PARSONS.** The mobile radio propagation channel. Pentech Press, 1992
- **ETSI.** Universal Mobile Telecommunications System (UMTS) ; UMTS Terrestrial Radio Access (UTRA) ; Concept evaluation. *UMTS 30.06,* Décembre 1997, vol. 3.0.0